(19) Europäisches Patentamt
European Patent Office
Office européen des brevets

(11) Numéro de publication: **0 120 169 B1**

# (12) FASCICULE DE BREVET EUROPEEN

(45) Date de publication du fascicule du brevet: **20.11.86**

(51) Int. Cl.$^4$: **C 07 C 69/587,** A 61 K 31/23

(21) Numéro de dépôt: **83400601.7**

(22) Date de dépôt: **23.03.83**

(54) **Nouveaux triglycérides, procédé de préparation, applications en diététique et en thérapeutique et les compositions les renfermant.**

(43) Date de publication de la demande:
**03.10.84 Bulletin 84/40**

(45) Mention de la délivrance du brevet:
**20.11.86 Bulletin 86/47**

(84) Etats contractants désignés:
**AT BE CH DE GB IT LI LU NL SE**

(56) Documents cités:

**Néant**

(73) Titulaire: **ROUSSEL-UCLAF**
**35, boulevard des Invalides**
**F-75007 Paris (FR)**

(72) Inventeur: **Mendy, François**
**24, quai du 4 Septembre**
**F-92100 Boulogne (FR)**
Inventeur: **Barthelemy, Pierre**
**Rue de Chamecy Rully**
**F-60810 Barbery (FR)**

(74) Mandataire: **Fritel, Hubert et al**
**Département des Brevets ROUSSEL UCLAF B.P. no 9**
**F-93230 Romainville (FR)**

EP 0 120 169 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

La présente invention concerne de nouveaux triglycérides, un procédé pour leur préparation, leur application en diététique et en thérapeutique et les compositions les renfermant.

La présente invention a pour objet les produits de formule générale I:

$$\begin{array}{ll} 1 & CH_2—O—CO—(CH_2)_n—CH_3 \\ 2 & CHOR \\ 3 & CH_2—O—CO—(CH_2)_n—CH_3 \end{array} \qquad (I)$$

dans laquelle R représente le fragment acyle d'un acide gras polyinsaturé renfermant de 18 à 22 atomes de carbone, ledit fragment acyle pouvant être oxydé, R ne pouvant toutefois représenter le fragment acyle de l'acide eicosatétrayn - 5,8,11,14 - oïque, et dans laquelle n représente un nombre entier pouvant varier de 2 à 16.

Des triglycérides d'acides gras à chaîne moyenne renfermant de 2 à 12 atomes de carbone sont mentionnés dans le Brevet Spécial de Médicament n° 3 598 à titre de substances permettant d'améliorer l'absorption des matières grasses. Par ailleurs, des triglycérides d'acides gras polyinsaturés sont décrits dans d'autres brevets. En particulier, dans le brevet fraçais n° 2.426.461, le triglycéride de l'acide eicosapentaèn 5,8,11,14,17-oïque est indiqué pour le traitement des troubles thromboemboliques. Mais le triglycéride d'un acide gras polyinsaturé n'est pas une forme assurant une bonne absorption dans l'organisme de l'acide gras polyinsaturé.

En particulier, étant donné que les triglycérides de l'acide eicosapentaénoïque en position (1) sont mal hydrolysés par les lipases pancréatiques, les triglycérides de synthèse de l'acide eicosapentaénoïque ou de l'acide docosahexanoïque ne permettent pas obligatoirement d'aboutir à un monoglycéride en position (2),/Nestor R. Bottino, Lipids. 1967, *2* (6)/. Or, il est bien connue que les monoglycérides en (2) constituent la forme la mieux absorbée par l'organisme humain.

Il était donc très intéressant de pouvoir disposer de produits susceptibles d'apporter à l'organsme de tels monoglycérides. Il a été trouvé que certains triglycérides de structure déterminée, notamment ceux hydrolysés facilement en positions 1 et 3 par les enzymes du tractus digestif répondaient à cet objectif. C'est pourquoi l'invention a pour objet les triglycérides de formule I qui ont la propriété de libérer facilement le monoglycéride en (2) par action de la lipase pancréatique.

En effet, cet enzyme hydrolyse les acides gras de chaîne moyenne estérifiant les positions 1 et 3 du glycérol et libère donc le monoglycéride en (2). L'homme n'ayant pas de monoglycéride lipase intestinale active sur la position (2), l'acide gras polyinsaturé fixe sur la position (2) d'un glycérol se trouve ainsi beaucoup mieux protégé dans la lumière intestinale et n'est jamais libéré à ce stade. Ainsi, les triglycérides tels qu'ils sont définis à la formule I assument une très bonne absorption du monoglycéride en (2) et de cette façon permettent à l'organisme d'utiliser l'acide gras polyinsaturé porté par le monoglycéride dans les meilleures conditions.

En outre, du fait de la bonne absorption du monoglycéride en (2) qu'ils libère, les triglycérides de l'invention peuvent être utilisés à des doses thérapeutiques plus faibles que les triglycérides banals de synthèse, Par ailleurs, sur le plan galénique, les triglycérides de formule I présentent un autre avantage. En effet, les acides gras polyinsaturés se dégradent facilement et de ce fait deviennent malodorants et donc difficilement utilisables. Les triglycérides de l'invention présentent une stabilité permettant de paillier à cet inconvénient et ils constituent donc une forme bien appropriée pour l'administration d'un acide gras polyinsaturé.

Parmi les triglycérides objet de l'invention, on retient plus particulièrement les produits de forme I, tels que définis ci-dessus, caractérisés en ce que les fragments acyles oxydés sont les fragments acyles hydroxylés, époxydés, hydropéroxydés, hydroxyépoxydés.

Les fragments acyles oxydés peuvent être, par exemple, les fragments des acides gras hydroxylés, etels que les acides:

15-OH eicosatétraèn-5,8,11,13-oïque,
12-OH eicosatétraèn-5,8,10,14-oïque,
11-OH eicosatétraèn-5,8,12,14-oïque,
8-OH eicosatétraèn-5,9,11,14-oïque,
9-OH eicosatétraèn-5,7,11,14-oïque,
5-OH eicosatétraèn-6,8,11,14-oïque,
12-OH eicosapentaèn-5,8,10,14,17-oïque,
15-OH eicosapentaèn-5,8,11,13,17-oïque.

On peut citer également les triglycérides répondant à la formule I ci-dessus, caractérisés en ce que dans la formule I, n représente un nombre entier pouvant varier de 2 à 10, et tout particulièrement les triglycérides, caractérisés en ce que n est égal à 2, 4, 6 ou 10.

Les valeurs de n ci-dessus correspondant respectivement aux radicaux butyryle, hexanoyle, octanoyle, dodécanoyle.

On peut citer aussi notamment les triglycérides, caractérisés en ce que dans la formule I, R représente un fragment acyle d'un acide gras polyinsaturé non oxydé, R étant essentiellement le fragment acyle d'un des acides gras polyinsaturés suivants:

| | |
|---|---|
| l'acide α-linolénique | $C_{18}$:3,ω3 |
| l'acide γ-linolénique | $C_{18}$:3,ω6 |
| l'acide stéaridonique | $C_{18}$:4,ω3 |
| l'acide dihomo γ-linolénique | $C_{20}$:3,ω6 |
| l'acide dihomo α-linolénique | $C_{20}$:3,ω3 |
| l'acide eicosatétraénoïque | $C_{20}$:4,ω3 |
| l'acide arachidonique | $C_{20}$:4,ω6 |
| l'acide eicosapentaénoïque | $C_{20}$:5,ω3 |
| l'acide docosatétraénoïque | $C_{22}$:4,ω6 |
| l'acide docosapentaénoïque | $C_{22}$:5,ω6 |
| l'acide docosahexaénoïque | $C_{22}$:6,ω3 |
| l'acide docosapentaénoïque | $C_{22}$:5,ω3 |

et tout particulièrement, on peut citer le triglycéride suivant:

— le 1,3-dioctanoyl eicosapentaénoyl glycérol de formule:

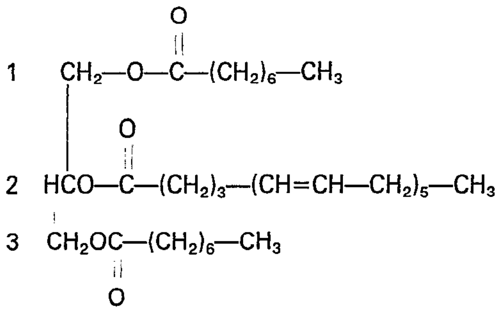

La présente invention a également pour objet un procédé de préparation, caractérisé en ce que l'on estérifie la dihydroxyacétone avec 2 équivalents molaires d'un dérivé fonctionnel d'un acide de formule II:

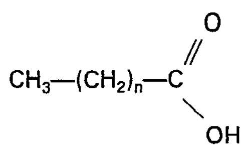

(II)

dans laquelle n est défini comme précédemment, obtient un produit de formule III:

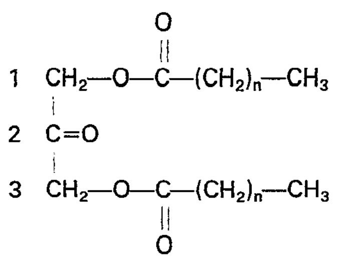

(III)

que l'on traite par un agent réducteur ne provoquant pas la saponification des groupements esters, obtient un produit de formule IV:

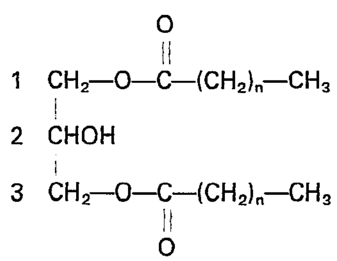

(IV)

que l'on estérifie avec un dérivé fonctionnel d'un acide gras polyinsaturé, ledit acide ayant pour formule R—OH, R ayant la même signification que celle indiquée ci-dessus, pour obtenir un triglycéride de formule I, que l'on oxyde, le cas échéant, dans le cas où R est un fragment acyle non oxydé, par action de lipoxygénases ou par simple oxydation, pour obtenir le produit de formule I dans laquelle R est un fragment acyle oxydé.

Dans les conditions préférentielles de mise en oeuvre de l'invention, le procédé ci-dessus décrit est réalisé de la manière suivante:

— le dérivé fonctionnel de l'acide de formule II est de préférence le chlorure d'acide. On peut également utiliser l'anhydride, un anhydride mixte, un ester actif.

— l'estérification est effectuée commodément en présence d'une base tertiaire telle que la pyridine ou la triéthylamine. La réaction est réalisée au sein d'un solvant chloré tel que le dichlorométhane, le dichloroéthane, le chloroforme, le tétrachlorure de carbone. Des solvants tels que le diméthyl formamide ou le diméthyl acétamide peuvent être aussi utilisés.

— la réduction de la fonction cétonique en 2 du produit de formule III est caractérisée en ce que l'agent réducteur ne provoquant pas la saponification des groupements esters est un borohydrure de métal alcalin, tels que le borohydrure de sodium ou le borohydrure de potassium agissant en milieu alcoolique, l'alcool étant le méthanol, l'éthanol ou le propanol.

— la réduction est effectuée à pH contrôlé, notamment à pH maintenu entre 6,5 et 7,5.

— le dérivé fonctionnel de l'acide gras polyinsaturé de formule R—OH est de préférence le chlorure d'acide, l'anhydre, un anhydride mixte, un ester actif, peuvent également convenir,

— l'estérification du produit de formule IV s'effectue dans des conditions préférentielles identiques à celles mentionnées plus haut lors de l'estérification de la dihydroxyacétone,

— l'oxydation chimique des triglycérides de formule I dans laquelle R est un fragment acyle non oxydé peut être; par exemple, l'auto-oxydation par simple vieillissement ou l'oxydation obtenue par action d'oxygène hyperbare, d'eau oxygénée ou d'acides oxydants tels que l'acide métachloroperbenzoïque. L'oxydation biochimique peut être réalisée, par exemple, à l'aide d'enzymes telles que les lipoxygénases ou les enzymes d'α-, de β- ou d'ω-oxydation des acides gras.

Les dérivés fonctionnels des acides de formule II et des acides gras polyinsaturés de formule R—OH sont préparés par des méthodes connues en elles-mêmes.

Les acides gras polyinsaturés oxydés peuvent être obtenus par oxydation chimique ou biochimique, telle que mentionnée ci-dessus, à partir des acides gras polyinsaturés non oxydés.

Les produits de l'invention manifestant d'intéressantes propriétés pharmacologiques. Tout d'abord, ils possèdant notamment l'activité propre de l'acide gras polyinsaturé fixé en position 2. C'est ainsi que les produits de l'invention manifestent les propriétés suivantes:

— activité de précurseur de dérivés de type prostaglandiniques,
— activité de précurseur d'acides gras hydroxylés,
— activité de précurseur de substances de type leucotriènes.

Ces propriétés sont plus ou moins marquées selon l'acide gras polyinsaturé considéré.

Les triglycérides de formule I porteurs d'un dérivé acyle d'un acide gras polyinsaturé hydroxylé, époxydé, hydroperoxydé ou hydroxyépoxydé ont, en outre:

— des propriétés anti-agrégantes par effet direct ou indirect (par inhibition de la synthèse de prostaglandines de la famille 2);
— des propriétés immuno-modulantes.

Par rapport à l'acide gras polyinsaturé lui-même, les produits selon l'invention présentent les avantages essentiels d'une meilleure stabilité et d'une excellente absorption au niveau de tractus digestif.

Les produits objet de la présente demande, trouvent leur emploi chaque fois que l'on désire fournir à l'organisme un acide gras polyinsaturé dans les situations de déficience de l'organisme en acides gras polyinsaturés, comme, par exemple, dans le cas de troubles de la digestion des lipides, de maladies métaboliques ou dans le cas du vieillissement. Dans ce type de situations, on observe très souvent un besoin accru de l'organisme en un acide gras polyinsaturé spécifique et l'administration des produits de l'invention répond à ce besoin.

La présente invention a ainsi pour l'objet l'utilisation des triglycérides définis ci-dessus, comme aliments ou suppléments alimentaires répondant à des besoins spécifiques nitritionnels.

Par exemple, parmi les acides gras polyinsaturés que les triglycérides selon l'invention permettent d'apporter à l'organisme du dénutri, on peut citer notamment les acides gras polyinsaturés suivants:

| | |
|---|---|
| l'acide γ-linolénique | $C_{18}$:3,ω6 |
| l'acide stéaridonique | $C_{18}$:4,ω3 |
| l'acide dihomo γ-linolénique | $C_{20}$:3,ω6 |
| l'acide arachidonique | $C_{20}$:4,ω6 |
| l'acide eicosapentanoïque | $C_{20}$:5,ω3 |
| l'acide docosahexanoïque | $C_{20}$:6,ω3 |

Généralement dans de telles situations, l'administration par la voie intraveineuse des acides gras ne permet pas de pallier à la diminution de leur taux et ceci plus particulièrement chez le dénutri alcoolique et le cirrhotique.

La présente invention a de ce fait pour objet les produits de nutrition thérapeutique contenant un des triglycérides tels que définis ci-dessus, en association éventuelle avec un véhicule neutre convenant à l'administration orale, entérale ou parentérale.

La présente invention a également pour objet à titre de médicaments des triglycérides tels que définis précédemment.

L'invention a tout spécialement pour objet à titre de médicaments:

— le 1,3-dioctanoyl-2-eicosapentaènoyl glycérol.

Les produits ci-dessus définis constituent, selon l'invention des médicaments très utiles en thérapeutique humaine, notamment pour le traitement des troubles de digestion des lipides, des maladies métaboliques, des cas de dénutrition chez le dénutri alcoolique et le cirrhotique, de l'arthérosclérose, de l'hypertension, de l'hyper-agrégation plaquettaire, de la sénescence cérébrale, et des états où une immunomodulation est souhaitée. Dans ce dernier cas, les produits de l'invention sont utilisés, par exemple, dans le traitement des maladies autoimmunes telles que la polyarthrite rhumatoïde le lupus érythémateix, le pemphigus ou l'anémie hémolytique ou dans la prévention du rejet des organes transplantés ou ou des greffes ou dans le traitement de certaines réactions du type hyperinflammatoire ou allergique, des syndromes bronchiques, inflammatoires ou des bronchopathies constrictrices telles que l'asthme.

La dose usuelle, variable selon le produit utilisé et l'affection en cause, peut s'échelonner, par exemple, entre 50 mg et 6 g par jour chez l'adulte par voie orale et de préférence pour le 1,3-dioctanoyl eicosapentaénoyl glycérol entre 140 mg et 300 mg par jour.

La présente invention a également pour objet les compositions pharmaceutiques renfermant à titre de principe actif un médicament précité. Ces compositions sont réalisées de façon à pouvoir être administrées par voie digestive ou parentérale.

Elles peuvent être solides ou liquides et se présenter sous les formes pharmaceutiques couramment utilisées en médecine humaine, comme, par exemple, les comprimés simples ou dragéifiés, les gélules, les granulés, les suppositoires, les préparations injectables; elles sont préparées selon les méthodes usuelles.

Le ou les principes actifs, peuvent y être incorporés à des excipients habituellement employés dans ces compositions pharmaceutiques, tels que le talc, la gomme arabique, le lactose, l'amidon, le stéarate de magnésium, le beurre de cacao, les véhicules aqueux ou non, les corps gras d'origine animale ou végétale, les dérivés paraffiniques, les glycols, les divers agents mouillants, dispersants ou émulsifiants, les conservateurs.

Les exemples donnés ci-après illustrent l'invention sans toutefois la limiter.

Exemple 1: 1,3-dioctanoyl eicosapentaénoyl glycérol

Stade a: 1,3-dioctanoyl dihydroxyacétone

On mélange sous agitation 22,125 g de dihydroxyacétone et 187,5 cm3 de dichloroéthane et porte au reflux pendant 10 minutes. On ajoute

60,5 cm3 de pyridine; on ajoute alors goutte à goutte 119,75 g de chlorure d'octanoyle et 187,5 cm3 de dichloroéthane, on revient à température ambiante sous agitation pendant 2 heures. On élimine par filtration le chlorhydrate de pyridine formé, lave le filtrat à l'eau distillée, puis avec une solution aqueuse de bicarbonate de sodium à 5% puis de nouveau à l'eau distillée jusqu'à obtention d'un pH final de 5,2, puis, sèche la solution organique. On élimine le solvant sous pression réduite, obtient un résidu visqueux que l'on recristallise dans l'acétate d'éthyle et obtient 60,16 g de produit attendu. (F=60°C).

| | | | | |
|---|---|---|---|---|
| Analyse: | $C_{19}H_{34}O_5$ | | | |
| Calculé: | C% | 66,63 | H% | 10,01 |
| Trouvé: | | 66,9 | | 10,1. |

Stade B: le 1,3-dioctanoyl glycérol

On dissout sous agitation à 25°C, 30 g de produit obtenu au stade précédent dans 1500 cm3 d'alcool éthylique. On amène le pH de la solution à 5,4 par addition de 0,6 cm3 d'une solution aqueuse d'acide acétique au 1/2. Puis on ajoute en 15 minutes, 8,55 g de borohydrure de sodium, le pH étant maintenu inférieur ou égal à 7,5 par l'addition d'acide acétique dilué au 1/2. On élimine le solvant sous pression réduite, reprend le résidu à l'aide de dichloroéthane et d'eau distillée. On sépare la phase organique par décantation, la lave à l'eau distillée, la sèche et élimine le solvant sous pression réduite et obtient 30,19 g de produit attendu. (F=26°C).

| | | | | |
|---|---|---|---|---|
| Analyse: | $C_{19}H_{36}O_5$ | | | |
| Calculé: | C% | 66,24 | H% | 10,53 |
| Trouvé: | | 66,2 | | 10,6. |

Stade C: 1,3-dioctanoyl eicosapentaénoyl glycérol

On dissout 1,35 g de produit obtenu au stade précédent dans 1,8 cm3 de dichloroéthane, et 0,256 cm3 de pyridine, puis ajoute goutte à goutte, à température ambiante, 1 g de chlorure d'eicosapentaénoyle et 1,8 cm3 de dichloroéthane. On agite 20 minutes à température ambiante, conserve une nuit à +5°C, élimine par filtration le chlorhydrate de pyridine formé et évapore le filtrat sous pression réduite. On reprend le résidu par 14,9 cm3 de cyclohexane, lave avec 2,98 cm3 de mélange soude 0,1N—éthanol (1/1), sépare la phase organique, la lave jusqu'à pH=7,3 avec 2,98 cm3 d'un mélange soude 0,1N—éthanol—eau (1/5/5), puis avec 2,98 cm3 d'un mélange eau—éthanol (1/1), jusqu'à pH=5,4, évapore le solvant de la phase organique sous pression réduite et obtient 2,07 g de produit que l'on chromatographie sur silice et obtient 669 mg de produit attendu.

| | | | | |
|---|---|---|---|---|
| Analyse: | $C_{39}H_{64}O_6$ | | | |
| Calculé: | C% | 74,48 | H% | 10,26 |
| Trouvé: | | 73,0 | | 10,0. |

Spectre RMN

Le spectre RMN a été effectue dans le deutérochloroforme; il confirme la structure du produit.

Exemple 2

On a réalisé des gélules de formule suivante:

| | |
|---|---|
| 1,3-dioctanoyl eicosapentaénoyl glycérol | 100 mg |
| Excipient q.s.p. | 300 mg |

(Détail de l'excipient: kaolin, amidon de maïs, avicel, stéarate de magnésium, talc aérosil).

Exemple 3

On a réalisé des capsules molles de formule suivante:

| | |
|---|---|
| 1,3-dioctanoyl eicosapentaénoyl glycérol | 200 mg |
| Excipient pour une capsule molle q.s.p. | 1 capsule |

Exemple 4

On a réalisé une émulsion à usage intraveineux de formule suivante:

| | |
|---|---|
| 1,3-dioctanoyl eicosapentaénoyl glycérol | 10 g |
| Acétate de DL α-tocophérol | 0,3 g |
| Lécithine de soja | 1,2 g |
| Glycérine N | 1,8 g |
| Eau distillée q.s.p. | 100 ml |

Etude clinique

11 sujets dont 6-hyper-agrégants plaquettaires et 5 normo-agrégants plaquettaires ont reçu quotidiennement et par voie orale 160 mg de 1,3-dioctanoyl 2-eicopentaénoyl glycérol pendant 1 mois.

Les coefficients d'agrégation plaquettaires ont été calculés avant et après traitement selon la technique du Ph.DARCET parue dans les Ann.Nutr.Alim. 1980 *34*, 277—290.

Au bout d'un mois de traitement, il apparaît que les modifications de l'agrégation plaquettaire chez les normo-agrégants plaquettaires sont très faibles alors que l'amplitude de variation est très grande chez les hyper-agrégants plaquettaires. Après le traitement, on constate que quatre des six sujets hyper-agrégants plaquettaires ont des coefficients d'agrégation plaquettaire normaux, un sujet présente un coefficient d'agrégation plaquettaire presque normal et un seul sujet ne présente pas un coefficient d'agrégation plaquettaire satisfaisant.

**Revendications pour les Etats Contractants: BE, CH, DE, GB, IT, LI, LU, NL, SE**

1. Triglycérides de formule générale (I):

1 $CH_2—O—CO—(CH_2)_n—CH_3$

2 CHOR (I)

3 $CH_2—O—CO—(CH_2)_n—CH_3$

dans laquelle R représente le fragment acyle d'un acide gras polyinsaturé renfermant de 18 à 22 atomes de carbone, ledit fragment acyle pouvant être oxydé, R ne pouvant toutefois représenter le fragment acyle de l'acide eicosatétrayn - 5,8,11,14 - oïque, et dans laquelle n représente un nombre entier pouvant varier de 2 à 16.

2. Triglycérides tels que définis par la formule I de la revendication 1, caractérisés en ce que les fragments acyles oxydés sont les fragments acyles hydroxylés, époxydés, hydropéroxydés, hydroxyépoxydés.

3. Triglycérides tels que définis par la formule I de la revendication 1 ou 2, caractérisés en ce que dans la formule I n représente un nombre entier pouvant varier de 2 à 10.

4. Triglycérides selon la revendication 1 ou 3, caractérisés en ce que dans la formule I, R représente un fragment acyle d'un acide gras polyinsaturé non oxydé.

5. Triglycérides selon la revendication 1, caractérisés en ce que dans la formule I, R représente un fragment acyle d'un des acides gras polyinsaturés suivants:

| | |
|---|---|
| l'acide α-linolénique | $C_{18}$:3,ω3 |
| l'acide γ-linolénique | $C_{18}$:3,ω6 |
| l'acide stéaridonique | $C_{18}$:4,ω3 |
| l'acide dihomo γ-linolénique | $C_{20}$:3,ω6 |
| l'acide dihomo α-linolénique | $C_{20}$:3,ω3 |
| l'acide eicosatétraénoïque | $C_{20}$:4,ω3 |
| l'acide arachidonique | $C_{20}$:4,ω6 |
| l'acide eicosapentaénoïque | $C_{20}$:5,ω3 |
| l'acide docosatétraénoïque | $C_{22}$:4,ω6 |
| l'acide docosapentanoïque | $C_{22}$:5,ω6 |
| l'acide docosahexaénoïque | $C_{22}$:6,ω3 |
| l'acide docosapentaénoïque | $C_{22}$:5,ω3 |

6. Le 1,3-dioctanoyl eicosapenténoyl glycérol de formule:

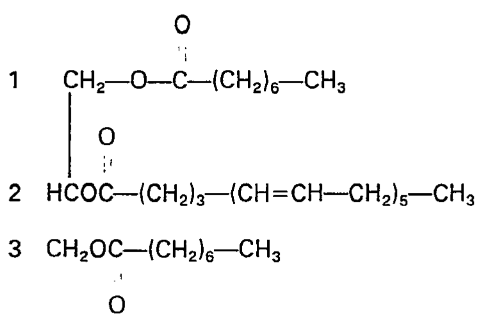

7. Procédé de préparation des triglycérides de formule I tels que définis à la revendication 1, caractérisé en ce que l'on estérifie la dihydroxy acétone avec deux équivalents molaires d'un dérivé fonctionnel d'un acide de formule II:

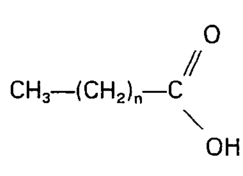 (II)

dans laquelle n est défini comme à la revendication 1, obtient un produit de formule III:

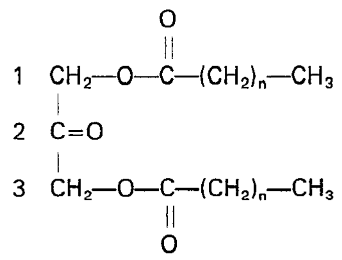 (III)

que l'on traite par un agent réducteur ne provoquant pas la saponification des groupements esters, obtient un produit de formule IV:

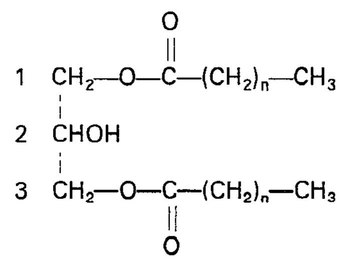 (IV)

que l'on estérifie avec un dérivé fonctionnel d'un acide gras polyinsaturé, ledit acide ayant pour formule ROH, R ayant la même signification que celle indiquée à la revendication 1, pour obtenir un triglycéride de formule I, que l'on oxyde, le cas échéant, dans le cas où R est un fragment acyle non oxydé, par action de lipoxygénases ou par simple oxydation, pour obtenir le produit de formule I dans laquelle R est un fragment acyle oxydé.

8. Procédé de préparation selon la revendication 7, caractérisé en ce que l'agent réducteur ne provoquant pas la saponification des groupements esters est un borohydrure de métal alcalin.

9. Utilisation des triglycérides définis à l'une quelconque des revendications 1 à 6, comme aliments ou suppléments alimentaires répondant à des besoins spécifiques nutritionnels.

10. Produits de nutrition thérapeutique contenant un des triglycérides tels que définis à l'une quelconque des revendications 1 à 6, en association éventuelle avec un véhicule neutre convenant à l'administration orale, entérale ou parentérale.

11. A titre de médicaments des triglycérides tels que définis à l'une quelconque des revendications 1 à 5.

12. A titre de médicament du triglycéride tel que défini à la revendication 6.

13. Les compositions pharmaceutiques renfermant à titre de principe actif un médicament selon l'une quelconque des revendications 11 ou 12.

**Revendications pour l'Etat Contractant: AT**

1. Procédé de préparation des triglycérides de formule générale I:

1 $CH_2—O—CO—(CH_2)_n—CH_3$

2 CHOR (I)

3 $CH_2—O—CO—(CH_2)_n—CH_3$

dans laquelle R représente le fragment acyle d'un acide gras polyinsaturé renfermant de 18 à 22 atomes de carbone, ledit fragment acyle pouvant être oxydé, R ne pouvant toutefois représenter le fragment acyle de l'acide eicosatétrayn - 5,8,11,14 - oïque, et dans laquelle n représente un nombre entier pouvant varier de 2 à 16, caractérisé en ce que l'on estérifie la dihydroxy acétone avec deux equivalents molaires d'un dérivé fonctionnel d'un acide de formule II:

$$CH_3—(CH_2)_n—C(=O)—OH \quad (II)$$

dans laquelle n est défini comme précédemment, obtient un produit de formule III:

1 $CH_2—O—C(=O)—(CH_2)_n—CH_3$

2 C=O (III)

3 $CH_2—O—C(=O)—(CH_2)_n—CH_3$

que l'on traite par un agent réducteur ne provoquant pas la saponification des groupements esters, obtient un produit de formule IV:

1 $CH_2—O—C(=O)—(CH_2)_n—CH_3$

2 CHOH (IV)

3 $CH_2—O—C(=O)—(CH_2)_n—CH_3$

que l'on estérifie avec un dérivé fonctionnel d'un acide gras polyinsaturé, ledit acide ayant pour formule ROH, R ayant la même signification que celle indiquée précédemment; pour obtenir un triglycéride de formule I, que l'on oxyde, le cas échéant, dans le cas où R est un fragment acyle non oxydé, par action de lipoxygénases ou par simple oxydation, pour obtenir le produit de formule I dans laquelle R est un fragment acyle oxydé.

2. Procédé de préparation selon la revendication 1, caractérisé en ce que l'agent réducteur ne provoquant pas la saponification des groupements esters est un borohydrure de métal alcalin.

3. Procédé selon la revendication 1 ou 2, caractérisé en ce que l'on prépare des triglycérides de formule I dans laquelle R est un fragment acyle hydroxylé, époxydé, hydroperoxydé, hydroxyépoxydé.

4. Procédé selon l'une quelconque des revendications 1 à 3, caractérisé en ce que n représente un nombre entier pouvant varier de 2 à 10.

5. Procédé selon l'une quelconque des revendications 1, 2 ou 4, caractérisé en ce que 'on prépare des triglycérides de formule I, dans laquelle R représente un fragment acyle d'un acide gras polyinsaturé non oxydé.

6. Procédé selon la revendication 1 ou 2, caractérisé en ce que l'on prépare des triglycérides de formule I dans laquelle R représente un fragment acyle d'un des acides gras polyinsaturés suivants:

| | |
|---|---|
| l'acide α-linolénique | $C_{18}$:3,ω3 |
| l'acide γ-linolénique | $C_{18}$:3,ω6 |
| l'acide stéaridonique | $C_{18}$:4,ω3 |
| l'acide dihomo γ-linolénique | $C_{20}$:3,ω6 |
| l'acide dihomo α-linolénique | $C_{20}$:3,ω3 |
| l'acide eicosatétraénoïque | $C_{20}$:4,ω3 |
| l'acide arachidonique | $C_{20}$:4,ω6 |
| l'acide eicosapentaénoïque | $C_{20}$:5,ω3 |
| l'acide docosatétraénoïque | $C_{22}$:4,ω6 |
| l'acide docosapentanoïque | $C_{22}$:5,ω6 |
| l'acide docosahexaénoïque | $C_{22}$:6,ω3 |
| l'acide docosapentaénoïque | $C_{22}$:5,ω3 |

7. Procédé selon la revendication 1, caractérisé en ce que l'on prépare le 1,3-dioctanoyl eicosapentaénoyl glycérol de formule:

1 $CH_2—O—C(=O)—(CH_2)_6—CH_3$

2 $HCOC(=O)—(CH_2)_3—(CH=CH—CH_2)_5—CH_3$

3 $CH_2OC(=O)—(CH_2)_6—CH_3$

**Patentansprüche für die Vertragsstaaten: BE, CH, DE, GB, IT, LI, LU, NL, SE**

1. Triglyceride der allgemeinen Formel (I)

1 $CH_2—O—CO—(CH_2)_n—CH_3$

2 CHOR (I)

3 $CH_2—O—CO—(CH_2)_n—CH_3$

worin R das Acyl-Fragment einer mehrfach ungesättigten Fettsäure mit 18 bis 22 Kohlenstoffatomen darstellt, wobei dieses Acyl-Fragment oxidiert sein kann, und wobei R jedoch nicht das Acyl-Fragment der Eicosa - 5,8,11,14 - tetrainsäure darstellen kann, und n eine ganze Zahl von 2 bis 16 bedeutet.

2. Triglyceride der Formel I gemäß Anspruch 1, dadurch gekennzeichnet, daß die oxidierten Acyl-Fragmente hydroxylierte, epoxidierte, hydroperoxidierte oder hydroxyepoxidierte Acyl-Fragmente sind.

3. Triglyceride der Formel I gemäß Anspruch 1 oder 2, dadurch gekennzeichnet, daß in der Formel I n eine ganze Zahl von 2 bis 10 bedeutet.

4. Triglyceride gemäß Anspruch 1 oder 3, dadurch gekennzeichnet, daß in der Formel I R ein Acyl-Fragment einer nicht-oxidierten, mehrfach ungesättigten Fettsäure bedeutet.

5. Triglyceride gemäß Anspruch 1, dadurch gekennzeichnet, daß in der Formel I R ein Acyl-Fragment einer der folgenden mehrfach ungesättigten Fettsäuren bedeutet:

| | |
|---|---|
| α-Linolensäure | $C_{18}$:3,ω3 |
| γ-Linolensäure | $C_{18}$:3,ω6 |
| Stearidonsäure | $C_{18}$:4,ω3 |
| Dihomo-γ-linolensäure | $C_{20}$:3,ω6 |
| Dihomo-α-linolensäure | $C_{20}$:3,ω3 |
| Eicosatetraensäure | $C_{20}$:4,ω3 |
| Arachidonsäure | $C_{20}$:4,ω6 |
| Eicosapentaensäure | $C_{20}$:5,ω3 |
| Docosatetraensäure | $C_{22}$:4,ω6 |
| Docosapentansäure | $C_{22}$:5,ω6 |
| Docosahexaensäure | $C_{22}$:6,ω3 |
| Docosapentaensäure | $C_{22}$:5,ω3 |

6. 1,3 - Dioctanoyl - eicosapentenoyl - glycerin der Formel

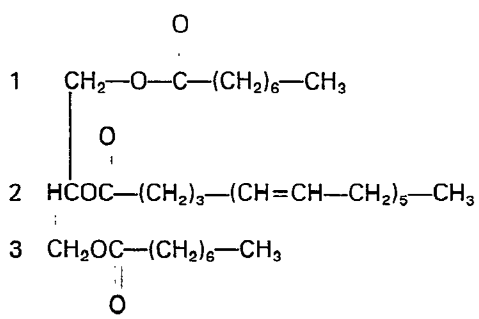

7. Verfahren zur Herstellung der Triglyceride der Formel I, gemäß Anspruch 1, dadurch gekennzeichnet, daß man Dihydroxyaceton mit 2 Mol-Äquiv. eines funktionellen Derivats einer Säure der Formel II

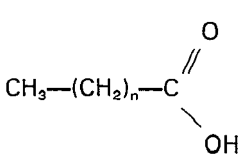

(II)

worin n wie in Anspruch 1 definiert ist, verestert, ein Produkt der Formel III

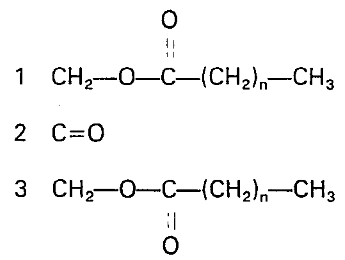

(III)

erhält, das man mit einem Reduktionsmittel, das nicht zu einer Verseifung der Estergruppen führt, behandelt, ein Produkt der Formel IV

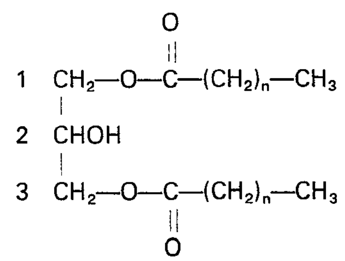

(IV)

erhält, das man mit einem funktionellen Derivat einer mehrfach ungesättigten Fettsäure verestert, wobei diese Säure die Formel R—OH besitzt, worin R die gleich Bedeutung wie in Anspruch 1 angegeben aufweist, um ein Triglycerid der Formel I zu erhalten, das man gegebenenfalls in dem Fall, bei dem R ein nicht-oxidiertes Acyl-Fragment bedeutet, durch Umsetzung mit Lipoxygenasen oder durch einfache Oxidation oxidiert, um das Produkt der Formel I zu erhalten, worin R ein oxidiertes Acryl-Fragment ist.

8. Verfahren gemäß Anspruch 7, dadurch gekennzeichnet, daß das Reduktionsmittel, das nicht zu einer Verseifung der Estergruppen führt, ein Alkalimetallborhydrid ist.

9. Verwendung der Triglyceride gemäß einem der Ansprüche 1 bis 6 als Nahrungsmittel oder Nahrungsergänzungsmittel, das spezifischen Ernährungsbedürfnissen entspricht.

10. Produkt für die therapeutische Ernährung, enthaltend eines der Triglyceride gemäß einem der Ansprüche 1 bis 6, gegebenenfalls in Assoziation mit einem neutralen Träger, der für die orale, enterale oder parenterale Verabreichung geeignet ist.

11. Als Arzneimittel Triglyceride gemäß einem der Ansprüche 1 bis 5.

12. Als Arzneimittel das Triglycerid gemäß Anspruch 6.

13. Pharmazeutische Zusammensetzungen, enthaltend als Wirkstoff ein Arzneimittel gemäß einem der Ansprüche 11 oder 12.

**Patentansprüche für den Vertragsstaat: AT**

1. Verfahren zur Herstellung von Triglyceriden der allgemeinen Formel I

1 $CH_2—O—CO—(CH_2)_n—CH_3$

2 CHOR (I)

3 $CH_2—O—CO—(CH_2)_n—CH_3$

worin R das Acyl-Fragment einer mehrfach ungesättigten Fettsäure mit 18 bis 22 Kohlenstoffatomen darstellt, wobei dieses Acyl-Fragment oxidiert sein kann und wobei R jedoch nicht das Acyl-Fragment der Eicosa - 5,8,11,14 - tetrainsäure darstellen kann, und n eine ganze Zahl von 2 bis 16 bedeutet, dadurch gekennzeichnet, daß man Dihydroxyaceton mit 2 Mol-Äquiv. eines funktionellen Derivats einer Säure der Formel II

$$CH_3—(CH_2)_n—C(=O)—OH \qquad (II)$$

worin n wie vorstehend definiert ist, verestert, ein Produkt der Formel III

1 $CH_2—O—C(=O)—(CH_2)_n—CH_3$

2 C=O (III)

3 $CH_2—O—C(=O)—(CH_2)_n—CH_3$

erhält, das man mit einem Reduktionsmittel, das nicht zu einer Verseifung der Estergruppen führt, behandelt, ein Produkt der Formel IV

1 $CH_2—O—C(=O)—(CH_2)_n—CH_3$

2 CHOH (IV)

3 $CH_2—O—C(=O)—(CH_2)_n—CH_3$

erhält, das man mit einem funktionellen Derivat einer mehrfach ungesättigten Fettsäure verestert, wobei diese Säure die Formel R—OH besitzt, worin R die gleiche Bedeutung, wie vorstehend angegeben, aufweist, um ein Triglycerid der Formel I zu erhalten, das man gegebenenfalls in dem Fall, bei dem R ein nicht-oxidiertes, Acyl-Fragment bedeutet, durch Umsetzung mit Lipoxygenasen oder durch einfache Oxidation oxidiert, um das Produkt der Formel I zu erhalten, worin R ein oxidiertes Acyl-Fragment darstellt.

2. Verfahren gemäß Anspruch 1, dadurch gekennzeichnet, daß das Reduktionsmittel, das nicht zu einer Verseifung der Estergruppen führt, ein Alkalimetallborhydrid ist.

3. Verfahren gemäß Anspruch 1 oder 2, dadurch gekennzeichnet, daß man Triglyceride der Formel I herstellt, worin R ein hydroxyliertes, epoxidiertes, hydroperoxidiertes oder hydroxyepoxidiertes Acyl-Fragment ist.

4. Verfahren gemäß einem der Ansprüche 1 bis 3, dadurch gekennzeichnet, daß n eine ganze Zahl von 2 bis 10 bedeutet.

5. Verfahren gemäß einem der Ansprüche 1, 2 oder 4, dadurch gekennzeichnet, daß man Triglyceride der Formel I herstellt, worin R ein Acyl-Fragment einer nicht-oxidierten, mehrfach ungesättigten Fettsäure darstellt.

6. Verfahren gemäß Anspruch 1 oder 2, dadurch gekennzeichnet, daß man Triglyceride der Formel I herstellt, worin R ein Acyl-Fragment einer der folgenden mehrfach ungesättigten Fettsäuren darstellt:

| | |
|---|---|
| α-Linolensäure | $C_{18}$:3,ω3 |
| γ-Linolensäure | $C_{18}$:3,ω6 |
| Stearidonsäure | $C_{18}$:4,ω3 |
| Dihomo-γ-linolensäure | $C_{20}$:3,ω6 |
| Dihomo-α-linolensäure | $C_{20}$:3,ω3 |
| Eicosatetraensäure | $C_{20}$:4,ω3 |
| Arachidonsäure | $C_{20}$:4,ω6 |
| Eicosapentaensäure | $C_{20}$:5,ω3 |
| Docosatetraensäure | $C_{22}$:4,ω6 |
| Docosapentansäure | $C_{22}$:5,ω6 |
| Docosahexaensäure | $C_{22}$:6,ω3 |
| Dicosapentaensäure | $C_{22}$:5,ω3 |

7. Verfahren gemäß Anspruch 1, dadurch gekennzeichnet, daß man 1,3 - Dioctanoyl - eicosapentaenoyl - glycerin der Formel

1 $CH_2—O—C(=O)—(CH_2)_6—CH_3$

2 $HCOC(=O)—(CH_2)_3—(CH=CH—CH_2)_5—CH_3$

3 $CH_2OC(=O)—(CH_2)_6—CH_3$

herstellt.

**Claims for the Contracting States: BE, CH, DE, GB, IT, LI, LU, NL, SE**

1. Triglycerides with the general formula (I):

1 $CH_2—O—CO—(CH_2)_n—CH_3$

2 CHOR (I)

3 $CH_2—O—CO—(CH_2)_n—CH_3$

in which R represents the acyl fragment of a polyunsaturated fatty acid containing from 18 to 22 carbon atoms, the said acyl fragment being able to be oxidized, R, however, not being able to represent the acyl fragment of eicosatetrayn - 5,8,11,14 - oic, and in which n represents a whole number which can vary from 2 to 16.

2. Triglycerides as defined by formula I of claim 1, characterized in that the oxidized acyl fragments are hydroxyl, epoxide, hydroperoxide, or hydroxyepoxide acyl fragments.

3. Triglycerides as defined by formula I of claim 1 or 2, characterized in that in formula I n represents a whole number which can vary from 2 to 10.

4. Triglycerides according to claim 1 or 3, characterized in that in formula I, R represents a non-oxidized acyl fragment of a polyunsaturated fatty acid.

5. Triglycerides according to claim 1, characterized in that in formula I, R represents an acyl fragment of one of the following polyunsaturated fatty acids:

| | |
|---|---|
| α-linolenic acid | $C_{18}$:3,ω3 |
| γ-linolenic acid | $C_{18}$:3,ω6 |
| stearidonic acid | $C_{18}$:4,ω3 |
| dihomo γ-linolenic acid | $C_{20}$:3,ω6 |
| dihomo α-linolenic acid | $C_{20}$:3,ω3 |
| eicosatetraenoic acid | $C_{20}$:4,ω3 |
| arachidonic acid | $C_{20}$:4,ω6 |
| eicosapentaenoic acid | $C_{20}$:5,ω3 |
| docosatetraenoic acid | $C_{22}$:4,ω6 |
| docosapentanoic acid | $C_{22}$:5,ω6 |
| docosahexaenoic acid | $C_{22}$:6,ω3 |
| docosapentaenoic acid | $C_{22}$:5,ω3 |

6. 1,3-dioctanoyl eicosapentenoyl glycerol with the formula:

$$
\begin{array}{ll}
 & \quad\quad O \\
 & \quad\quad \| \\
1 & CH_2-O-C-(CH_2)_6-CH_3 \\
 & | \\
 & | \quad O \\
 & | \quad \| \\
2 & HCOC-(CH_2)_3-(CH=CH-CH_2)_5-CH_3 \\
 & | \\
3 & CH_2OC-(CH_2)_6-CH_3 \\
 & \quad\quad \| \\
 & \quad\quad O
\end{array}
$$

7. Preparation process for triglycerides with the formula I as defined in claim 1, characterized in that dihydroxy acetone is esterified with two molar equivalents of a functional derivative of an acid with the formula II:

$$CH_3-(CH_2)_n-C\begin{array}{l} /\!\!/ O \\ \backslash OH \end{array} \quad (II)$$

in which n is defined as in claim 1, and a product with the formula III:

$$
\begin{array}{lll}
 & \quad\quad\quad O & \\
 & \quad\quad\quad \| & \\
1 & CH_2-O-C-(CH_2)_n-CH_3 & \\
 & | & \\
2 & C=O & (III) \\
 & | & \\
3 & CH_2-O-C-(CH_2)_n-CH_3 & \\
 & \quad\quad\quad \| & \\
 & \quad\quad\quad O &
\end{array}
$$

is obtained, which is treated by a reducing agent not causing saponification of the ester groups, a product with the formula IV:

$$
\begin{array}{lll}
 & \quad\quad\quad O & \\
 & \quad\quad\quad \| & \\
1 & CH_2-O-C-(CH_2)_n-CH_3 & \\
 & | & \\
2 & CHOH & (IV) \\
 & | & \\
3 & CH_2-O-C-(CH_2)_n-CH_3 & \\
 & \quad\quad\quad \| & \\
 & \quad\quad\quad O &
\end{array}
$$

is obtained, which is esterified with a functional derivative of a polyunsaturated fatty acid, the said acid having as its formula ROH, R having the same significance as that indicated in claim 1, in order to obtain a triglyceride with the formula I, which is oxidized, if the case arises, in the case where R is a non-oxidized acyl fragment, by the action of lipoxygenases or by simple oxidation, in order to obtain the product with the formula I in which R is an oxidized acyl fragment.

8. Preparation process according to claim 7, characterized in that the reducing agent not causing saponification of the ester groups is a borohydride of an alkali metal.

9. Utilisation of triglycerides as defined in any one of the claims 1 to 6, as foods or food supplements meeting specific nutritional needs.

10. Therapeutic nutritional products containing one of the triglycerides as defined in any one of the claims 1 to 6, in possible association with a neutral vehicle suitable for oral, enteral or parenteral administration.

11. As medicaments, triglycerides as defined in any one of the claims 1 to 5.

12. As a medicament, the triglyceride as defined in claim 6.

13. Pharmaceutical compositions containing as active principle a medicament according to either one of the claims 11 or 12.

**Claims for the Contracting State: AT**

1. Preparation process for triglycerides with the general formula I:

$$
\begin{array}{lll}
1 & CH_2-O-CO(CH_2)_n-CH_3 & \\
 & | & \\
2 & CHOR & (I) \\
 & | & \\
3 & CH_2-O-CO-(CH_2)_n-CH_3 &
\end{array}
$$

in which R represents the acyl fragment of a polyunsaturated fatty acid containing from 18 to 22 carbon atoms, the said acyl fragment being able to be oxidized, R, however, not being able to represent the acyl fragment of eicosatetrayn - 5,8,11,14 - oic acid, and in which n represents a whole number which can vary from 2 to 16, characterized in that dihydroxy acetone is esterified with two molar equivalents of a functional derivative of an acid with the formula II:

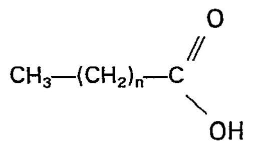

(II)

in which n is defined as previously, a product with the formula III:

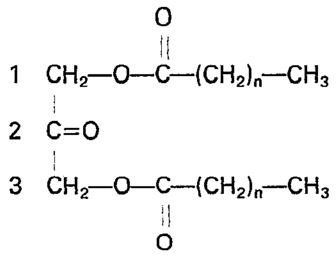

(III)

is obtained, which is treated by a reducing agent not causing saponification of the ester groups, a product with the formula IV:

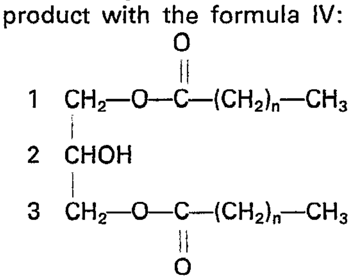

(IV)

is obtained which is esterified with a functional derivative of a polyunsaturated fatty acid, the said acid having as its formula ROH, R having the same significance as that indicated previously; in order to obtain a triglyceride with the formula I, which is oxidized, if the case arises, in the case where R is an unoxidized acyl fragment, by the action of lipoxygenases or by simple oxidation, in order to obtain the product with the formula I in which R is an oxidized acyl fragment.

2. Preparation process according to claim 1, characterised in that the reducing agent not causing saponification of the ester groups is a borohydride of an alkali metal.

3. Process according to claim 1 or 2, characterized in that triglycerides with the formula I are prepared in which R is a hydroxyl, epoxide, hydroperoxide, or hydroxyepoxide acyl fragment.

4. Process according to any one of the claims 1 to 3, characterized in that n represents a whole number which can vary from 2 to 10.

5. Process according to any one of the claims 1, 2 or 4, characterized in that triglycerides with formula I are prepared, in which R represents a non-oxidized acyl fragment of a polyunsaturated fatty acid.

6. Process according to claim 1 or 2, characterized in that triglycerides with the formula I are prepared, in which R represents an acyl fragment of one of the following polyunsaturated fatty acids:

| | |
|---|---|
| α-linolenic acid | $C_{18}$:3,ω3 |
| γ-linolenic acid | $C_{18}$:3,ω6 |
| stearidonic acid | $C_{18}$:4,ω3 |
| dihomo γ-linolenic acid | $C_{20}$:3,ω6 |
| dihomo α-linolenic acid | $C_{20}$:3,ω3 |
| eicosatetraenoic acid | $C_{20}$:4,ω3 |
| arachidonic acid | $C_{20}$:4,ω6 |
| eicosapentaenoic acid | $C_{20}$:5,ω3 |
| docosatetraenoic acid | $C_{22}$:4,ω6 |
| docosapentanoic acid | $C_{22}$:5,ω6 |
| docosahexaenoic acid | $C_{22}$:6,ω3 |
| docosapentaenoic acid | $C_{22}$:5,ω3 |

7. Process according to claim 1, characterized in that 1,3-dioctanoyl eicosapentaenoyl glycerol with the formula:

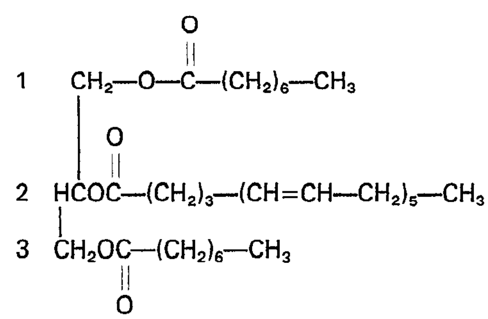

is prepared.